# EUROPEAN PATENT SPECIFICATION

(11) **EP 2 484 227 B1**
(45) Date of publication and mention of the grant of the patent: **01.08.2018**
(21) Application number: 10820606.1
(22) Date of filing: 29.09.2010
(51) Int. Cl.: A23J 3/04, A23J 1/10, A23L 2/66, A23J 3/00, A23L 33/18

(54) **PROCESS FOR PRODUCTION OF COMPOSITION CONTAINING COLLAGEN PEPTIDE**
VERFAHREN ZUR HERSTELLUNG EINER ZUSAMMENSETZUNG MIT EINEM COLLAGENPEPTID
PROCÉDÉ POUR LA PRODUCTION D'UNE COMPOSITION CONTENANT UN PEPTIDE DE COLLAGÈNE

(30) Priority: 30.09.2009 JP 2009228869; 18.11.2009 JP 2009263409
(43) Date of publication of application: 08.08.2012
(73) Proprietor: FUJIFILM Corporation, Tokyo 106-8620 (JP)
(72) Inventor: HARAGUCHI, Nobuyuki, Ashigarakami-gun Kanagawa 258-8577 (JP); SATO, Masao, Ashigarakami-gun Kanagawa 258-8577 (JP)
(74) Representative: Hoffmann Eitle
(86) International application number: PCT/JP2010/066991
(87) International publication number: WO 2011/040491

(56) References cited:
- EP-A2- 1 673 986
- WO-A1-2009/117572
- JP-A- 2002 051 734
- JP-A- 2002 125 638
- JP-A- 2006 204 287
- JP-A- 2007 159 557
- JP-A- 2008 079 565
- JP-A- 2008 148 610
- JP-A- 2009 118 824
- JP-A- 2009 189 284
- US-A- 4 357 362
- TAFFIN A ET AL: "Hydrolyzed collagen", INTERNET CITATION, 1 November 2006 (2006-11-01), pages 1-5, XP002539547, Retrieved from the Internet: URL:http://www.harnisch.com/wel/files/pdf/ 306/hydrolyzed_collagen.pdf [retrieved on 2006-11-01]
- KEIZO ARIHARA ET AL.: 'Keihi Collagen Bunkaibutsu o Genryo to suru Maillard Hanno Seiseibutsu no Kosanka Kassei to Shikosei' THE JAPANESE SOCIETY ZOOTECHNICAL SCIENCE ANNUAL MEETING ABSTRACTS vol. 109, 27 March 2008, page 63, XP008163415
- MASASHI OGASAWARA ET AL.: 'Taste properties of Maillard-reaction products prepared from 1000 to 5000 Da peptide' FOOD CHEMISTRY vol. 99, no. 3, 2006, pages 600 - 604, XP027989460
- TOSHIHIDE NISHIMURA: 'Mechanism involved in the improvement of meat taste during postmortem aging' FOODS & FOOD INGREDIENTS J. JPN. vol. 213, no. 4, 01 April 2008, pages 336 - 344, XP008160626
- MASAKI YOSHIDA ET AL.: 'Regulation of Collagen Metabolism in Human Skin Fibroblasts by Low- Molecular-Mass Substance' JOURNAL OF SCCJ vol. 30, no. 3, October 1996, pages 293 - 299, XP008160682
- YUKIO MITSUI: 'Choonpa Donyu Oyobi Ion Donyu ni yoru Ascorbic Acid no Keihi Shinto Sokushin Koka' FRAGRANCE JOURNAL vol. 34, no. 9, 15 September 2006, pages 83 - 86, XP008160683
- NOBUYUKI IJICHI: 'Effects of free amino acid L-ornithine for wound healing and skin condition' FOOD PROCESSING AND INGREDIENTS vol. 45, no. 8, 01 August 2010, pages 10 - 12, XP008160678

## Description

### Technical Field

The present invention relates to a method of producing a collagen peptide-containing composition.

### Background Art

Collagens are animal proteins which are conventionally used as gelatin in the field of food products, and are also drawing much attention in the fields of medicine and cosmetics in recent years because collagens are the major components of dermal and connective tissues and the like. A number of collagen-containing foods and beverages have been developed for the purpose of conveniently taking highly functional collagens (for example, Japanese Patent Application Laid-Open (JP-A) No. 3-160956). Further, foods and beverages containing a collagen peptide obtained by making a high-molecular collagen into a low-molecular weight substance have been also developed for the purpose of effectively utilizing collagens taken in the body (for example, Japanese Patent Application Laid-Open (JP-A) No. 2006-204287). Japanese Patent Application (JP-A) No. 2002-125638 discloses a beverage for bone and joint strengthening comprising a collagen peptide and glucosamine. On the other hand, collagens have a gelatin-like unpleasant odor and unique unpleasant taste. Therefore, when a collagen is added as it is to a food product, the taste and flavor of the food product itself may be deteriorated, so that it may not be accord with the consumer preference.

In order to mask such unpleasant taste and flavor, for example, WO00/24273 discloses a collagen-containing edible product in which a sucralose-containing masking agent is compounded, and describes that the unpleasant odor and taste unique to collagen can be significantly masked by compounding sucralose in an aqueous solution containing 3% by weight of a gelatin hydrolysis product.

JP-A No. 2006-204287 discloses a collagen-containing beverage and food product which contain sucralose and a stevia extract, and discloses a collagen-containing beverage prepared by mixing and dissolving a collagen peptide, sucralose, a stevia mixture and acesulfame potassium, adjusting the pH, and then sterilizing by heating.

Similarly to collagen peptides, soy protein-originated peptides are also known as a peptide exhibiting bitterness and astringency. For example, Japanese Patent Application Laid-Open (JP-A) No. 2007-97465 discloses a beverage and food product in which such a soy protein-originated peptide and an oligosaccharide such as maltosyltrehalose are added, and it is described that the bitterness and astringency of the peptide-containing beverage and food product can be reduced by adding an oligosaccharide almost without affecting the sweetness and sourness.

Conjugation of polysaccharides to whey protein isolates for improving structural properties is known from WO2009/117572. Japanese Patent Application Laid-Open (JP-A) No. 2000-300190 discloses a beverage and food product having reduced bitterness which are obtained by adding a sodium salt of an organic acid, such as sodium citrate, and a saccharide, such as maltitol, to a soybean peptide.

However, the bitterness-reducing effect provided by a masking agent such as sucralose is not sufficient. In particular, when the molecular weight of a collagen is made small in order to improve the absorption of the collagen, the amount of terminal amino acid causing bitterness is increased; therefore, such a beverage cannot be the quaffable. When a large amount of sweetener is added for mitigating bitterness, refreshing taste may be impaired. Therefore, the demand for a collagen peptide-containing composition and beverage/food product containing the same, with which collagen is taken at high utilization efficiency and which is easy-to-drink/eat, has not been sufficiently satisfied.

### SUMMARY OF INVENTION

### Problems to be Solved by the Invention

The object of the present invention is to provide a collagen peptide-containing composition which contains collagen that has high utilization efficiency and which is easy-to-drink/eat.

### MEANS FOR SOLVING THE PROBLEMS

The invention provides the followings.
[1] A method of producing a collagen peptide-containing composition, the method comprising performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass of with respect to 1 part by mass of the collagen peptide, the reducing sugar being capable of undergoing Maillard reaction with an amino group in the collagen peptide.
[2] The method of producing a collagen peptide-containing composition according to [1], wherein an amount of the reducing sugar is from 0.001 parts by mass to 0.03 parts by mass with respect to 1 part by mass of the collagen peptide.
[3] The method of producing a collagen peptide-containing composition according to [1] or [2], wherein the collagen peptide has an average molecular weight of 1,000 or less.
[4] The method of producing a collagen peptide-containing composition according to any one of [1] to [3], further comprising performing a thermal sterilization treatment.
[5] The method of producing a collagen peptide-containing composition according to any one of [1] to [4], wherein the reducing sugar is at least one reducing sugar selected from reducing monosaccharides, reducing disaccharides, reducing trisaccharides and reducing oligosaccharides.
[6] The method of producing a collagen peptide-containing composition according to any one of [1] to [5], further comprising adding at least one additional amino acid selected from the group consisting of lysine, proline and ornithine to a reaction product obtained by the masking treatment.
[7] The method of producing a collagen peptide-containing composition according to any one of [1] to [5], further comprising adding at least one additional amino acid selected from the group consisting of lysine and proline to a reaction product obtained by the masking treatment.
[8] The method of producing a collagen peptide-containing composition according to any one of [1] to [7], further comprising adding at least one additive component selected from the group consisting of demulcents and sweeteners to a reaction product obtained by the masking treatment.
[9] The method of producing a collagen peptide-containing composition according to any one of [1] to [8], further comprising adding ascorbic acid to a reaction product obtained by the masking treatment.
[10] A collagen peptide-containing composition obtained by the production method of any one of [1] to [9], having reducing sugars at the total content of from 0.0001 parts by mass to 0.5 parts by mass with respect to 1 part by mass of the collagen peptide.
[11] A collagen peptide-containing composition, comprising a collagen peptide having an average molecular weight of 1,200 or less, a number of free amino group terminus, which is indicated when a ninhydrin reaction is performed on the collagen peptide, being 5 or less with respect to a number of free amino group terminus of glycine, which is indicated when a ninhydrin reaction is performed on glycine having the same mass as the collagen peptide and which is regarded as 100.
[12] The collagen peptide-containing composition according to [11], which is obtained by the production method according to any one of [1] to [9].
[13] The collagen peptide-containing composition according to [11[ or [12], wherein a total amount of reducing sugars in the composition is from 0.0001 parts by mass to 0.5 parts by mass with respect to 1 part by mass of the collagen peptide.
[14] A beverage or food product, comprising the collagen peptide-containing composition according to any one of [10] to [13].
[15] A method of reducing odor of a collagen peptide-containing composition, the method comprising performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass with respect to 1 part by mass of the collagen peptide, the reducing sugar being capable of undergoing Maillard reaction with an amino group in the collagen peptide.

### MODE FOR CARRYING OUT THE INVENTION

The method of producing a collagen peptide-containing composition of the present invention is a method including performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass of with respect to 1 part by mass of the collagen peptide, the reducing sugar being capable of undergoing Maillard reaction with an amino group in the collagen peptide.

According to the invention, by performing a masking treatment in which a collagen peptide having an average molecular weight of 1,200 or less and a prescribed reducing sugar capable of undergoing Maillard reaction are made to react in a liquid having a pH of from 5 to 12 under prescribed conditions, a Maillard reaction takes place between a terminal amino acid of the collagen peptide and the reducing sugar, so that the bitterness and unpleasant odor originated from the collagen peptide are reduced. As a result, the collagen peptide-containing composition can provide a collagen peptide-containing composition as well as a food and beverage which have high collagen utilization efficiency and reduced bitterness due to containing a low-molecular-weight collagen peptide and which are easy-to-drink/eat due to having reduced bitterness and reduced unpleasant odor.

The collagen peptide-containing composition in the invention is not limited to a composition which forms a final product itself as a beverage, food or the like, and may be a raw material composition which forms a part of a final product. In cases where the collagen peptide-containing composition is used as a raw material composition, it may be mixed with other similar composition(s) which can be applied in a beverage or food and may be further processed into a final product to form a beverage or food.

The collagen peptide-containing composition may be any composition as long as it is in the form of a liquid in the masking treatment, and the liquid may then be dried into a powder form or made into a gel form by blending a thickening agent therewith, or may be mixed with an aqueous medium to be in a solution form. In addition, in the same manner, the beverage and food containing the collagen peptide-containing composition may also be in any form such as a powder, gel or solution.

The term "step" used herein encompasses not only an independent step but also any step which can achieve the expected effect of the present step even if it cannot be clearly distinguished from other steps.

Further, a numerical value range expressed by "from (a minimum value) to (a maximum value)" represents a range which includes the values shown before and after the "to" as the minimum and maximum values, respectively.

Moreover, when a reference is made to the amount of a component in the composition, in cases where plural substances corresponding to the respective component are present in the composition, the referred amount means the total amount of the plural substances present in the composition unless otherwise specified.

The invention will now be described.

The collagen peptide used in the invention is a low-molecular-weight collagen peptide having an average molecular weight of 1,200 or less. By making the collagen peptide have an average molecular weight of 1,200 or less, a high absorption of the collagen peptide when it is taken as a beverage or food product is attained. Further, as long as the average molecular weight of the collagen peptide is in this range, the amount of the collagen peptide itself adhering to a container can be reduced to an acceptable level. From the viewpoint of collagen absorption, the collagen peptide may preferably have an average molecular weight of 1,000 or less, and more preferably have an average molecular weight of 800 or less. From the viewpoints of the taste as well as protection of the nutritional components against a heating treatment, the collagen peptide may preferably have an average molecular weight of 300 or more, and more preferably have an average molecular weight of 400 or more. The average molecular weight of the collagen peptide can be verified by gel permeation chromatography (GPC). That is, in order to determine the average molecular weight of the collagen peptide by GPC, calculation can be made based on a calibration curve representing the relationship between the retention time, which is obtained in advance by measuring plural types of polyethylene glycol (PEG) each having a known and different molecular weight, and the molecular weight. The "average molecular weight" herein refers to a weight average molecular weight calculated in terms of PEG in accordance with this method.

The collagen peptide can be obtained by hydrolyzing gelatin with an enzyme or an acid, is a protein containing glycine at a high content, and can be also commercially available. The collagen is not particularly restricted and it may be one extracted from mammalian collagen tissue or one extracted from fish collagen tissue. From the viewpoints of the product image, safety and the like in recent years, it is preferable that the collagen be of a fish-origin. The source of the fish-originated collagen may be a saltwater fish or a freshwater fish, and examples thereof include the skins of tuna (yellow-fin tuna), shark, cod, large-tooth flounder, right-eyed flounder, sea bream, tilapia, salmon and the like. Examples of the source of mammal-originated collagen include swine and bovine.

Further, the amino acid composition and the number of the amino acid which form the collagen peptide are not particularly restricted as long as the molecular weight of the collagen peptide is in the above-described range, and examples thereof include oligopeptides having 2 to 6 peptide bonds, such as collagen tripeptide having 3 amino acid residues (2 peptide bonds).

In the collagen peptide-containing composition, the amount of the collagen peptide contained in the solution used in the masking treatment may be any amount as long as the Maillard reaction can proceed. In general, it may be from 0.1% by mass to 90% by mass with respect to the total mass of the solution, and from the viewpoints of the dissolution time and reactivity, it is preferably from 1% by mass to 80% by mass.

The reducing sugar used in the masking treatment is that can undergo a Maillard reaction with a terminal amino group of the collagen peptide. Therefore, the reducing sugar in the collagen peptide-containing composition contains a sugar having at least one ketone or aldehyde, but does not contain a sugar alcohol which cannot undergo Maillard reaction.

The reducing sugar used in the reaction with the collagen peptide in the masking treatment may be any reducing sugar as long as it contains ketone or aldehyde which can undergo Maillard reaction. A reducing sugar also is preferred from the viewpoint of efficiently inducing Maillard reaction thereof with the collagen peptide.

Any reducing sugar may be employed as long as it is a sugar having a reducing property in an aqueous solution, and from the viewpoint of the masking treatment, it is preferable that the reducing sugar is at least one selected from reducing monosaccharides, reducing disaccharides, reducing trisaccharides and reducing oligosaccharides. Examples of the reducing sugar include monosaccharides such as glucose (dextrose), fructose, galactose, mannose, idose, altrose, gulose, talose, allose, xylose, arabinose, lyxose, ribose, threose, erythrose, erythrulose, xylulose, ribulose, psicose, sorbose and tagatose; disaccharides such as maltose, lactose and palatinose; and trisaccharides such as raffinose. Alternatively, the reducing sugar may be an isomerized sugar or a so-called oligosaccharide. Examples of the oligosaccharide include fructooligosaccharide, maltooligosaccharide, isomaltooligosaccharide and galactooligosaccharide. These oligosaccharides may be used individually, or two or more thereof may be used in combination. It is noted here that the oligosaccharide herein refers to a saccharide having 4 to 20 sugar units.

Among these, from the viewpoint of regulation of reaction, the reducing sugar may be preferably maltose (malt sugar).

In the masking treatment, such reducing sugar is made to react with the collagen peptide at a range of from 0.0001 parts to 0.05 parts by mass of the reducing sugar with respect to 1 part by mass of the collagen peptide. When the amount of the reducing sugar is less than 0.0001 parts by mass with respect to 1 part by mass of the collagen peptide, effective masking cannot be expected, while when it is greater than 0.05 parts by mass, the reaction rate is increased, making it difficult to control the reaction. From the viewpoint of attaining effective masking of the collagen peptide, the amount of the reducing sugar is preferably from 0.001 parts by mass to 0.03 parts by mass with respect to 1 part by mass of the collagen peptide.

The masking treatment is performed in a liquid having a pH of from 5 to 12 at a temperature of from 70°C to 100°C for 0.01 hour to 2 hours.

When the heating temperature in the masking treatment is lower than 70°C, it is difficult to perform masking of the collagen peptide by a masking reaction within a practically acceptable time of the production step, while when it is higher than 100°C, the reaction rate is increased, so that it becomes difficult to regulate the masking of the collagen peptide.

When the reaction time is shorter than 0.01 hour, effective masking by a masking reaction cannot be expected, while when it is longer than 2 hours, the reaction may proceeds excessively, so that it may result in an addition of unpleasant taste.

From the viewpoints of proceeding the reaction stably and regulating the reaction progress to an appropriate level, the heating temperature in the masking treatment may be preferably from 75°C to 95°C, and more preferably from 80°C to 90°C.

From the viewpoints of attaining sufficient masking effect and suppressing an addition of unwanted flavor by a byproduct, the heating time may be preferably from 0.05 hour to 1 hour, and more preferably from 0.1 hour to 0.5 hour.

It is preferable that an effective masking treatment be determined based on the relationship between the heating temperature and the heating time. From the relationship between effective masking treatment and degradation of the content components, it may be more preferable that the masking treatment be performed at a temperature of from 75°C to 95°C for 0.1 hour to 3 hours.

The liquid used in the masking treatment has a pH of from 5 to 12. At a pH of not lower than 5, when considering the actual production, effective masking can be expected to be attained in a short period of time, while when the pH is higher than 12, the reaction rate may be increased, making it difficult to control the reaction, so that an unpleasant flavor may be added.

From the viewpoint of the rate of the masking reaction, the liquid used in the masking treatment may preferably have a pH of from 5.3 to 10, and more preferably from 5.5 to 8.

A pH adjuster which can be employed to adjust the pH may be any pH adjuster which is conventionally used in the field of food products. The pH adjuster which can be employed is not particularly restricted and examples thereof include organic acids such as citric acid, gluconic acid, L-tartaric acid, malic acid, lactic acid, adipic acid, succinic acid, acetic acid, fumaric acid, phytic acid and derivatives of these acids; and inorganic acids such as baking soda (sodium bicarbonate), sodium carbonate, sodium hydroxide, calcium hydroxide, disodium hydrogenphosphate, sodium dihydrogenphosphate, dipotassium hydrogenphosphate, potassium dihydrogenphosphate and potassium carbonate. These may be used individually, or two or more thereof may be used in combination. The above-described organic acids may also be in the form of a sodium salt, a potassium salt or a magnesium salt.

As for the pH adjustment, it is enough as long as the pH is adjusted to a pH of from 5 to 12 at the time of the masking treatment; the timing of the pH adjustment may be any of before, after and during the heating. In particular, since the pH fluctuation caused by an addition of reducing sugar is vanishingly small, the pH of the liquid may also be regarded as the same as the pH prior to the addition of reducing sugar once the pH of the solution containing the collagen peptide is adjusted.

The Maillard reaction for the masking treatment starts when both of the collagen peptide and the reducing sugar are present and the pH and temperature conditions are satisfied.

Therefore, the liquid which serves as a reaction system for the Maillard reaction may be any liquid as long as both of the collagen peptide and the reducing sugar can dissolve therein, and examples of such liquid generally include water. In embodiments, prior to the start of the Maillard reaction, the liquid may be a solution which contains neither of the collagen peptide and the reducing sugar, a solution in which only the collagen peptide among these is dissolved, solution in which only the reducing sugar among these is dissolved, or a solution in which both of the collagen peptide and the reducing sugar are dissolved. However, at the start of the Maillard reaction, the liquid is a mixture solution containing both of the collagen peptide and the reducing sugar.

The timing of the addition of the reducing sugar and the collagen peptide to the liquid used as the reaction system for performing the masking treatment is not particularly restricted, and it may be any of before, after and during the heating. Further, the order of adding the reducing sugar and the collagen peptide is also not particularly restricted, and benefits of the invention can be attained in the same manner regardless of the order.

For example, the timing of the addition of the reducing sugar to the liquid may be before or after the addition of the collagen peptide, or may be simultaneous with the addition of the collagen peptide. Also, the timing of the addition of the reducing sugar to the liquid may be either of before or after the above-described pH and temperature conditions are satisfied, or may be simultaneous with heating. In cases where the addition of the reducing sugar is performed with heating, from the viewpoint of shortening the treatment time, it is preferable that the addition be performed while raising a temperature of the reducing sugar to the temperature at which the masking is performed, and from the viewpoint of ease of regulating the reaction, it is preferable that the reducing sugar is added at a timing at which a gap between the temperature at the timing, which is to be further increased to reach the masking treatment temperature, and the masking treatment temperature is small. In cases where the reducing sugar is added to a solution containing the collagen peptide after the heating, the time at which the reducing sugar is added is defined as the starting point of the masking treatment time. The timing of the addition of the collagen peptide to the reaction solution is not particularly restricted, while it is preferable to perform pH adjustment after the addition since the addition of the collagen peptide may cause a fluctuation in pH. From the viewpoint of the reaction uniformity, it is preferable that the reducing sugar be added to the solution containing the collagen peptide while heating the solution to a prescribed temperature.

In the production method according to the invention, the reaction product obtained by the masking treatment may be further subj ected to a thermal sterilization treatment. The thermal sterilization treatment performed after the masking treatment may be any thermal sterilization treatment which is usually used in the field of beverage and food products, and examples thereof include a treatment performed at 65°C to 100°C for 0.1 hour to 1 hour, and from the viewpoint of suppressing excessive alteration of the contents, the treatment is preferably performed at 65°C to 85°C for 0.1 hour to 1 hour. This thermal sterilization treatment can be performed to obtain the collagen peptide-containing composition that is sterilized.

In consideration that the reaction product obtained by the masking treatment can be subjected to the thermal sterilization treatment, it may be possible to add additive components, which are different from the collagen peptide and the reducing sugar, to the reaction product obtained from the masking treatment. The timing of the addition of the respective additive components after the masking treatment may be any ordinary timing and is not particularly restricted.

Examples of such additive components include at least one additional amino acid selected from the group consisting of lysine, proline and ornithine. By using the additional amino acid as a component added to the reaction product obtained by the masking treatment, lysine, proline and/or ornithine is/are provided in the form of a simple substance which maintain(s) the respective amino acid structure, which is different from a form of that reacted with a reducing sugar. Lysine, proline and ornithine are known as a constituent of collagen or a collagen synthesis-promoting component. By providing these additional amino acids in a body, the efficiencies of the collagen synthesis and utilization are improved in the body.

In particular, lysine and proline are contained in a collagen molecule in a modified form such as a hydroxylated form, and it is known that such modified form of lysine and proline cannot be utilized in the body. In the invention, since lysine and proline are added in an unmodified form, they are utilized together with other collagen constituents, so that the efficiency collagen synthesis in the body is improved.

Although addition of lysine and proline to a collagen peptide is difficult due to the bitterness thereof, which is unique to amino acids, incorporation of these at a large content to a certain degree can be possible by reducing the unpleasant flavor of the collagen peptide by the masking treatment. The lysine and proline may be alternatively in the form of an inorganic acid salt such as hydrochloride or phosphate, or in the form of an organic acid salt such as citrate, malate, α-ketoglutarate or aspartate.

Examples of ornithine include L-ornithine and D-ornithine. The ornithine may be one which is obtained by a chemical synthesis method, a fermentative production method or the like, or may be a commercial product. The ornithine may be alternatively in the form of an inorganic acid salt such as hydrochloride or phosphate, or in the form of an organic acid salt such as citrate, malate, α-ketoglutarate or aspartate.

The amount of the additional amino acid(s) added as the additive component(s) is not particularly restricted. From the viewpoints of the efficiency of collagen synthesis and the flavor, it is preferably from 0.01% by mass to 50% by mass, and more preferably 0.1% by mass to 30% by mass, with respect to the mass of the collagen peptide.

The amount of each additional amino acid in the collagen peptide-containing composition can be determined from the viewpoint of the collagen utilization efficiency. In the case of lysine, the amount thereof is preferably from 0.01% by mass to 40% by mass, and more preferably from 0.1% by mass to 20% by mass, with respect to the mass of the collagen peptide. Similarly, the amount of proline is preferably from 0.01% by mass to 50% by mass, and more preferably 0.1% by mass to 30% by mass, and the amount of ornithine is preferably from 0.01% by mass to 40% by mass, and more preferably from 0.1% by mass to 20% by mass.

From the viewpoint of improving the efficiency of collagen synthesis in the same manner as in the case of the additional amino acids, it is preferable that ascorbic acid or its inorganic/organic acid ester derivative or a salt thereof (hereinafter, these may be collectively referred to as "ascorbic acids") be added as a further additive component. Degradation caused by a heating treatment can be reduced by adding the ascorbic acids to the reaction product obtained by the masking treatment.

Examples of the ascorbic acid or its derivative or a salt thereof include L-ascorbic acid, sodium L-ascorbic acid, potassium L-ascorbic acid, calcium L-ascorbic acid, L-ascorbic acid phosphate, magnesium salt of L-ascorbic acid phosphate, L-ascorbic acid sulfate, disodium L-ascorbic acid sulfate, L-ascorbic acid stearate, L-ascorbic acid 2-glucoside, L-ascorbic acid palmitate and L-ascorbyl tetraisopalmitate. These may be used individually, or two or more thereof may be used in combination.

The amount of the ascorbic acids added as the additive component is not particularly restricted. From the viewpoint of the efficiency of collagen synthesis, it is preferably from 0.01% by mass to 100% by mass, and more preferably from 0.1% by mass to 80% by mass, with respect to the mass of the collagen peptide.

Further, as a further additive component, a masking agent for the additional amino acid(s) may also be added to the reaction product obtained by the masking treatment. The bitterness and unpleasant odor caused by the additional amino acid(s) are reduced thereby. Examples of such masking agent include demulcents and sweeteners which are conventionally used in the field of beverage and food products. Such demulcent and sweetener may be added in order to adjust the final flavor of the collagen peptide-containing composition, regardless of the presence or absence of the additional amino acid.

As the demulcent, a dextrin compound is preferable, and among dextrin compounds, cyclodextrin is more preferable. Examples of cyclodextrin include α-, β- and γ-cyclodextrins: and branched α-, branched β- and branched γ-cyclodextrins. The amount of these dextrins is preferably from 1% by mass to 100% by mass, and more preferably from 5% by mass to 50% by mass, with respect to the mass of the additional amino acid(s).

As the sweetener, in addition to the reducing sugars described in the above in relation to the masking treatment, a natural or synthetic sweetener may be employed. Examples of such sweetener include monosaccharides, disaccharides, oligosaccharides, polysaccharides and sugar alcohols that are conventionally used, such as sucralose, α-glucosyltransferase, modified stevia, aspartame, acesulfame-K, N-acetylglucosamine, arabinose, alitame, isotrehalose, isomaltitol, isomaltooligosaccharides (isomaltose, isomaltotriose, panose and the like), erythritol, oligo-N-acetylglucosamine, galactose, galactosylsucrose, galactosyllactose, galactopyranosyl(β1-3)galactopyranosyl(β1-4)glucopyranose, galactopyranosyl(β1-3)glucopyranose, galactopyranosyl(β1-6)galactopyranosyl(β1-4)glucopyranose, galactopyranosyl(β1-6)glucopyranose, *Glycyrrhiza* extract (glycyrrhizin), xylitol, xylose, xylooligosaccharides (xylotriose, xylobiose, and the like), glycerol, triammonium glycyrrhizinate, tripotassium glycyrrhizinate, trisodium glycyrrhizinate, diammonium glycyrrhizinate, dipotassium glycyrrhizinate, disodium glycyrrhizinate, curculin, glucose, gentiooligosaccharides (gentiobiose, gentiotriose, gentiotetraose, and the like), saccharin, sodium saccharin, cyclamate, sucrose, stachyose, stevia extract, stevia powder, dulcin, sorbitol, sorbose, thaumatin, theandeoligo, theandeoligosaccharide, tenryo-cha extract, trehalulose, trehalose, Nigeria berry extract, nigerooligosaccharides (nigerose and the like), neotame, neotrehalose, palatinit, palatinose, palatinose oligosaccharide, palatinose syrup, fucose, fructo-oligosaccharide (kestose, nystose, and the like), fructosyltransferase-treated stevia, fructofuranosyl nystose, Brazilian licorice extract, fructose, polydextrose, maltitol, maltose, maltosyl β-cyclodextrin, maltotetraitol, maltotriitol, maltooligosaccharides (maltotriose, tetraose, pentaose, hexaose, heptaose, and the like), mannitol, miracle fruit extract, melibiose, rakanka (*Momordica grosvenori*) extract, lactitol, lactulose, lactose, raffinose, rhamnose, ribose, isomerized sugar syrup, reduced isomaltooligosaccharide, reduced xylooligosaccharide, reduced gentiooligosaccharide, reduced malt sugar syrup, reduced starch syrup, enzymatically-modified licorice, enzymatically-hydrolyzed licorice, sugar-bound syrup (coupling sugar), soybean oligosaccharide, invert sugar, starch syrup and honey. These may be used individually, or two or more thereof may be used in combination.

In addition, an additive(s) commonly used in beverage and food products, such as coloring agent, preservative, thickening stabilizer, antioxidant, color former, bleach, mold inhibitor, gum base, bittering agent, enzyme, brightening agent, acidulant, flavoring agent, emulsifying agent, reinforcing agent, processing aid, spice and spice extract, may also be added.

These additive components may be added to the reaction product obtained by the masking treatment, or alternatively, the additive components may be added to the liquid before the masking treatment as long as the Maillard reaction between the collagen peptide subjected to the masking treatment and the reducing sugar is not adversely affected.

### [Collagen peptide-containing composition]

The collagen peptide-containing composition according to the invention is a composition containing a collagen peptide obtained by the above-described production method. Even though the composition contains a collagen peptide, bitterness and unpleasant odor thereof are reduced because the collagen peptide has been subjected to the masking treatment.

Therefore, the amounts of sweetener and masking agent can be reduced as compared to a conventional amount. In the collagen peptide-containing composition according to the invention, the total amount of reducing sugars contained in the composition as a whole is from 0.0001 parts by mass to 0.5 parts by mass, and is preferably from 0.0005 parts by mass to 0.25 parts by mass, with respect to 1 part by mass of the collagen peptide. Since the reducing sugar content is reduced in this manner, the collagen peptide-containing composition according to the invention not only contains the collagen peptide at high utilization efficiency, but also can provide a refreshing taste, so that the composition can be preferably used as a material of an easy-to-drink/eat beverage/food product. It is noted that the amount of the reducing sugar can be changed as appropriate in accordance with the purpose thereof and the like, and there may be a case in which the reducing sugar is contained in an amount greater than the above-described range.

The content of the collagen peptide in the collagen peptide-containing composition according to the invention is selected in accordance with the type, purpose and the like of the beverage/food product. In general, it may be from 1% by mass to 99% by mass, and preferably from 5% by mass to 80% by mass, with respect to the total mass of the collagen peptide-containing composition as a final product.

Another collagen peptide-containing composition according to the invention is a collagen peptide-containing composition, containing a collagen peptide having an average molecular weight of 1,200 or less, a number of free amino group terminus, which is indicated when a ninhydrin reaction is performed on the collagen peptide, being 5 or less with respect to a number of free amino group terminus of glycine, which is indicated when a ninhydrin reaction is performed on glycine having the same mass as the collagen peptide and which is regarded as 100.

It is known that bitterness is generated when the average molecular weight of collagen peptide is 1,200 or lower. The present inventors intensively studied the generation of bitterness and found that bitterness is caused by the free amino group terminus of peptide and that, by reducing its amount, bitterness can be reduced. In the above-described collagen peptide-containing composition, the number of free amino group terminus of the collagen peptide, which is indicated by a ninhydrin reaction, is not greater than 5 with respect to a number of free amino group terminus of glycine of 100, which glycine has the same mass as the collagen peptide; therefore, even when the above-described collagen peptide-containing composition contains a collagen peptide having an average molecular weight of 1,200 or less, it can be preferably used as a beverage or food product with the reduced bitterness.

The number of free amino group terminus of the collagen peptide can be estimated by a ninhydrin reaction. Ninhydrin is used as a coloring reagent of amino acids and peptides and, when it is reacted with an amino acid or peptide at a high temperature, Ruhemann's dye having the maximum absorbance at a wavelength of about 570 nm is produced via ammonia originated from an amino group. Therefore, since the number of the generated Ruhemann's dye correlates with the number of amino group terminus in the peptide, the number of free amino group terminus can be known from the number of the generated dye.

When the amount of the collagen peptide in the composition in terms of the above-described number of free amino group terminus indicated by the ninhydrin reaction exceeds 5 with respect to that of glycine of 100, bitterness which is at an acceptable level for a beverage or food product cannot be attained. From the viewpoint of obtaining a beverage having a reduced bitterness, it is preferable that the amount of the collagen peptide in the composition be, in terms of the above-described number of specific free amino group terminus, not greater than 4.6 with respect to that of glycine of 100.

Such a collagen peptide-containing composition can be preferably obtained by performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass of with respect to 1 part by mass of the collagen peptide, the reducing sugar being capable of undergoing Maillard reaction with an amino group in the collagen peptide. The above-described matters can be applied to this masking treatment as they are.

Further, in the same manner, those additive components described in the above, such as additional amino acid, masking agent and ascorbic acid, as well as other additives and the like, may also be contained individually, or two or more thereof may be contained in combination in this collagen peptide-containing composition. In this case, the method of producing a collagen peptide-containing composition according to the invention may further include the step of adding these additive components.

It is more preferable that the method further include subjecting the reaction product obtained by masking treatment to a thermal sterilization treatment.

In the same manner, other collagen peptide-containing composition according to the invention, despite containing a collagen peptide, also has reduced bitterness and unpleasant odor. Accordingly, the amounts of sweetener and masking agent can be reduced as compared to a conventionally-used amount. In other collagen peptide-containing composition according to the invention, the total amount of reducing sugars contained in the composition as a whole is preferably from 0.0001 parts by mass to 0.5 parts by mass, and more preferably 0.0005 parts by mass to 0.25 parts by mass, with respect to 1 part by mass of the collagen peptide. In this manner, since the reducing sugar content is reduced, other collagen peptide-containing composition according to the invention not only contains the collagen peptide at high utilization efficiency, but also can provide a refreshing taste, so that the compositions can be preferably used as a material of an easy-to-drink/eat beverage/food product. It is noted here that, in this other collagen peptide-containing composition, the amount of the reducing sugar can be changed as appropriate in accordance with the purpose thereof and the like, and the reducing sugar may be contained in an amount greater than the above-described range, in the same manner as in the case of the above-described collagen peptide-containing composition.

### [Beverage/food product]

The beverage/food product according to the invention contains the above-described collagen peptide-containing composition. More specifically, the beverage/food product according to the invention contains a heat-sterilized collagen peptide-containing composition, and may be consisted of this collagen peptide-containing composition alone or may be formed by being combined with other additional materials.

In the beverage/food product according to the invention, the total amount of reducing sugars contained in the composition as a whole is preferably from 0.0001 parts by mass to 0.5 parts by mass, and more preferably from 0.0005 parts by mass to 0.4 parts by mass, with respect to 1 part by mass of the collagen peptide, in the same manner as in the case of the above-described collagen peptide-containing composition. In this manner, since the reducing sugar content is reduced, the beverage/food product according to the invention not only contains the collagen peptide at high utilization efficiency, but also can provide a refreshing taste, so that it is easy to drink/eat.

The content of the collagen peptide in the beverage/food product according to the invention can be selected as appropriate in accordance with the form of the beverage/food product. For example, in cases where the beverage/food product is in the form of a solution, generally, the content of the collagen peptide is from 0.1% by mass to 75% by mass, and preferably from 1% by mass to 50% by mass, with respect to the mass of the whole beverage/food product.

The collagen peptide-containing composition and the beverage/food product according to the invention is those in which bitterness is masked by heat-reacting a mixture solution of a collagen peptide and reducing sugar. The collagen peptide-containing composition and the beverage/food product contain a reaction product of the masking reaction, the presence of which can be verified by structure analysis of the collagen peptide, detection of sugars, chromatometer, ninhydrin color reaction or the like.

The pH of the collagen peptide-containing composition and the beverage/food product according to the invention at 20°C is preferably from 3.0 to 5.0, more preferably from 3.5 to 4.0, and particularly preferably from 3.8 to 3.95. The pH of 3.5 or higher is often suitable for drinking, and the pH of 4.0 or lower is preferable in view of stability.

The pH of the collagen peptide-containing composition and the beverage/food product according to the invention can be adjusted using the above-described pH adjuster. Further, the above-described thermal sterilization treatment can be performed after adjusting the pH.

The beverage/food product according to the invention can take a variety of forms which can be supplied into a body mainly via the oral route and may be made into the form of a powder food, sheet-shaped food, bottled food, canned food, retort-packed food, capsule food, tablet-shaped food, fluid food, drinkable preparation or the like to be provided as, for example, a health food product, functional food product, dietary supplement or designated health food.

The method of reducing the odor of a collagen peptide-containing composition according to the invention includes performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass with respect to 1 part by mass of the collagen peptide, the reducing sugar being capable of undergoing Maillard reaction with an amino group in the collagen peptide.

Since the odor reduction method according to the invention performs a masking treatment using a prescribed reducing sugar, Maillard reaction takes place as described above, so that the odor unique to the collagen peptide can be effectively reduced. Thereby, the collagen peptide-containing composition, example of which is a collagen peptide-containing beverage/food product, can have satisfactory functionality of collagen peptide and high palatability at the same time.

As for the collagen peptide, reducing sugar capable of undergoing Maillard reaction with an amino group in the collagen peptide and conditions of the masking treatment in the method of reducing the odor of a collagen peptide-containing composition according to the invention, The matters described in the above in relation to the method of producing a collagen peptide-containing composition can be applied to this masking treatment as they are.

### EXAMPLES

It is noted here that "%" and "part(s)" are by mass unless otherwise specified,.

### [Example 1]

To 10 g of purified water, 10 g of a collagen peptide (originated from fish) (average molecular weight: 700) was added and dissolved by heating the resultant at 60°C. Then, 0.05 g of maltose was added thereto and dissolved to prepare a mixture solution. Prior to the addition of maltose, the solution had a pH of 6.2. Thereafter, a masking treatment was performed by raising the temperature of the thus prepared mixture solution to 70°C and heating the mixture solution for 2 hours.

After the treatment, 0.8 g of citric acid was added and the resultant was then quickly cooled to 40°C. Thereafter, 1 g of erythritol, 0.02 g of sucralose and 0.4 g of L-ascorbic acid were successively added and the total amount of the resultant was adjusted to 30 ml with purified water. After adjusting the resultant to have a final pH of 3.9, it was sterilized at 85°C for 15 minutes to prepare a sample solution of Example 1.

### [Examples 2 to 9]

Sample solutions of Examples 2 to 9 were prepared in the similar manner as in Example 1, except that the type and amounts of the respective components were changed as shown in Table 1. Maltose was added after dissolving the collagen peptide and the resulting mixture was then heated to 85°C or 95°C. After performing the heating treatment for a specified time, the resultant was quickly cooled to 40°C, and during this cooling, citric acid was added when the temperature of the resultant reached 70°C. The amounts of the respective components in Tables 1 and 2 are indicated in terms of milligram in 30 ml.

### [Example 10]

A sample solution of Example 10 was prepared in the same manner as in Example 5, except that maltose was added after completing the heating of the mixture to 85°C and citric acid was added immediately before the quick cooling and that the time length of the heating at 85°C was changed to 40 minutes.

### [Comparative Examples 1 to 4 and 6 to 10]

Samples solutions of Comparative Examples 1 to 4 and 6 to 10 were prepared in the same manner as in Example 1, except that the type and amounts of the respective components, as well as the heating temperature and time, were changed as shown in Table 2. In Comparative Examples 7 and 8, a collagen peptide having an average molecular weight of 1,200 and 2,000 were used, respectively. The heat-masking treatment of the collagen peptide was not performed in Comparative Examples 1 and 6 to 10.

### [Comparative Example 5]

A sample solution of Comparative Example 5 was prepared in the same manner as in Comparative Example 4, except that the addition of citric acid was performed simultaneous with the addition of maltose, that the reaction time was changed to 2 hours, and that the amount of citric acid was reduced to 700 mg.

### <Evaluation Tests>

### (1) Evaluation tests of the odor and bitterness of collagen-containing beverage

The collagen-containing beverages of Example 1 to 10 and Comparative Examples 1 to 10 were consumed by 10 subjects to evaluate the bitterness and peptide odor at the time. Evaluations were made on a 6-grade scale of 1 to 6. For the bitterness, a score of 1 was assigned when the strongest bitterness was felt, and for the odor, a score of 1 was also assigned when the strongest odor was felt. The average scores are shown in Tables 1 and 2 (decimals were rounded to the nearest integer).

### (2) Amount of free amino group terminus

For Examples 1 to 10 and Comparative Examples 1 to 10, the collagen peptide solution was taken out after the masking treatment and diluted with purified water to a collagen peptide concentration of 0.5% (w/w). On the other hand, a ninhydrin reagent solution (manufactured by Wako Pure Chemical Industries, Ltd.) was diluted with purified water to prepare a solution having a ninhydrin concentration of 30 µmol/mL.

These solutions were mixed at a ratio (mass ratio) of 1:1 and heated at 95°C for 15 minutes, and immediately thereafter, the resulting mixture was cooled. Then, the thus cooled mixture was diluted at an appropriate dilution factor and the absorbance thereof at a wavelength of 570 nm was measured.

Further, a 0.025% (w/w) glycine solution was prepared and subjected to the same treatment performed in the above on the collagen peptide solution.

Based on the measurement results of the both solutions, the ratio of the number of free amino group terminus was determined. The results are shown in Tables 1 and 2.

As shown in Tables 1 and 2, all of the samples solutions of Examples 1 to 10, which correspond to the invention, had reduced bitterness and odor, so that they were easy to drink.

Further, from the results of the number of free amino group terminus, it is understood that the compositions had reduced bitterness when a number of free amino group terminus of the respective heat-treated collagen peptide solution was 5 or less with respect that of glycine having the same mass as the collagen peptide as being 100.

**[Table 1]**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Collagen peptide | | | | | | | | | | |
| Added amount | 10000 | 10000 | 10000 | 10000 | 10000 | 10000 | 10000 | 10000 | 10000 | 10000 |
| Average molecular weight | 700 | 700 | 700 | 700 | 700 | 700 | 700 | 700 | 1200 | 700 |
| Collagen dissolution temperature | 60°C | 60°C | 60°C | 60°C | 60°C | 60°C | 60°C | 6O°C | 60°C | 60°C |
| Temperature prior to addition of maltose | 60°C | 60°C | 60°C | 60°C | 60°C | 60°C | 60°C | 60°C | 60°C | 85°C |
| Citric acid | - | - | - | - | - | - | - | - | - | - |
| pH prior to addition of maltose | 6.2 | 6.2 | 6.2 | 6.2 | 6.2 | 6.2 | 6.2 | 6.2 | 6.2 | 6.2 |
| Maltose | 50 | 50 | 500 | 50 | 50 | 50 | 50 | 50 | 50 | 50 |
| Masking treatment | | | | | | | | | | |
| Heating temperature | 70 | 85 | 85 | 95 | 85 | 85 | 85 | 85 | 85 | 85 |
| Heating time | 2 hours | 30 minutes | 10 minutes | 10 minutes | 30 minutes | 30 minutes | 30 minutes | 30 minutes | 30 minutes | 40 minutes |
| pH after heating | 6.1 | 6.0 | 5.8 | 5.9 | 6.0 | 6.0 | 6.0 | 6.0 | 6.0 | 6.0 |
| Temperature prior to addition of citric acid | 70°C | 70°C | 70°C | 70°C | 70°C | 70°C | 70°C | 70°C | 70°C | 85°C |
| Citric acid | 800 | 800 | 800 | 800 | 800 | 800 | 800 | 800 | 800 | 800 |
| Erythritol | 1000 | 1000 | 1000 | 1000 | 1000 | 1000 | 1000 | 1000 | 1000 | 1000 |
| Sucralose | 20 | 20 | 20 | 20 | 20 | 20 | 20 | 20 | 20 | 20 |
| L-proline hydrochloride | - | - | - | - | 500 | 1000 | 500 | 1000 | - | 500 |
| L-lysine hydrochloride | - | - | - | - | 200 | 500 | 200 | 500 | - | 200 |
| L-ornithine hydrochloride | - | - | - | - | - | - | 100 | 200 | - | - |
| α-cyclodextrin | - | - | - | - | - | - | 100 | 200 | - | - |
| L-ascorbic acid | 400 | 400 | 400 | 400 | 400 | 400 | 400 | 400 | 400 | 400 |
| Final pH | 3.9 | 3.9 | 3.9 | 3.9 | 3.9 | 3.9 | 3.9 | 3.9 | 3.9 | 3.9 |
| Bitterness | 4 | 5 | 4 | 4 | 4 | 3 | 5 | 4 | 5 | 5 |
| Ratio of the number of free amino acid terminus (based on 100 glycine) | 4.5 | 4.4 | 4.4 | 4.6 | 4.4 | 4.4 | 4.4 | 4.4 | 4.3 | 4.4 |
| Odor | 5 | 6 | 5 | 5 | 6 | 6 | 6 | 6 | 5 | 6 |

**[Table 2]**

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|
| Collagen peptide | | | | | | | | | | |
| Added amount | 10000 | | 10000 | 10000 | 10000 | 10000 | 10000 | 10000 | 10000 | 10000 |
| Average molecular weight | 700 | 700 | 700 | 700 | 700 | 700 | 1200 | 2000 | 700 | 700 |
| Collagen dissolution temperature | 60°C | 60°C | 60°C | 60°C | 60°C | 60°C | 60°C | 60°C | 60°C | 60°C |
| Temperature prior to addition of maltose | 60°C | 60°C | 60°C | 60°C | 60°C | 60°C | 60°C | 60°C | 60°C | 60°C |
| Citric acid | - | - | - | - | 700 | - | - | - | - | - |
| pH prior to addition of maltose | 6.2 | 6.2 | 6.2 | 6.2 | 4.5 | 6.2 | 6.2 | 6.2 | 6.2 | 6.2 |
| Maltose | - | 50 | 50 | 500 | 500 | 500 | - | - | - | 1000 |
| Masking treatment | | | | | | | | | | |
| Heating temperature | - | 60 | 85 | 85 | 85 | - | - | - | - | 85 |
| Heating time | - | 2 hours | 2.5 hours | 2.5 hours | 2 hours | - | - | - | - | 10 minutes |
| pH after heating | 6.1 | 6.1 | 6.1 | 6.1 | 4.5 | 6.1 | 6.1 | 6.1 | 6.1 | 5.8 |
| Temperature prior to addition of citric acid | 70°C | 70°C | 70°C | 70°C | 70°C | 70°C | 70°C | 70°C | 70°C | 70°C |
| Citric acid | 800 | 800 | 800 | 800 | - | 700 | 800 | 800 | 800 | 800 |
| Erythritol | 1000 | 1000 | 1000 | 1000 | 1000 | 1000 | 1000 | 1000 | 1000 | 1000 |
| Sucralose | 20 | 20 | 20 | 20 | 20 | 20 | 20 | 20 | 20 | 20 |
| L-proline hydrochloride | - | - | - | - | - | - | - | - | 500 | - |
| L-lysine hydrochloride | - | - | - | - | - | - | - | - | 200 | - |
| L-ornithine hydrochloride | - | - | - | - | - | - | - | - | - | - |
| α-cyclodextrin | - | - | - | - | - | - | - | - | - | - |
| L-ascorbic acid | 400 | 400 | 400 | 400 | 400 | 400 | 400 | 400 | 400 | 400 |
| Final pH | 3.9 | 3.9 | 3.9 | 3.9 | 4.5 | 4.5 | 3.9 | 3.9 | 3.9 | 3.9 |
| Bitterness | 1 | 1 | 2 | 1 | 2 | 2 | 2 | 5 | 1 | 2 |
| Ratio of the number of free amino acid terminus (based on 100 glycine) | 5.5 | 5.4 | 5.8 | 6.2 | 5.2 | 5.2 | 5.1 | 3.5 | 5.5 | 6.1 |
| Odor | 2 | 2 | 3 | 2 | 3 | 2 | 2 | 3 | 1 | 2 |

### (2) Evaluation tests on the actual feeling of the effects by continuous consumption of collagen-containing food product

The actual feeling of the effects of the test solutions according to Comparative Example 8 and Examples 2 and 9 were evaluated by 15 subjects (groups A to C, each of which including 5 female subjects).

The subjects drank each solution in an amount of 30 ml everyday for one week and evaluated the following ten items relating to the skin condition on a 10-point scale everyday.

Recorded items regarding the skin condition were (a) skin moisture; (b) skin tone; (c) skin texture; (d) skin dryness; (e) skin elasticity; (f) how well make-up sits/feel of putting make-up; (g) skin roughness; (h) acne; (i) skin itchiness; and (j) skin luster.

When the skin condition of one subject after drinking the respective collagen-containing food product was improved as compared to the skin condition prior to the drinking with respect to at least one among the 10 items, the product was regarded as providing "actual feeling of the effects", and the ratio (%) of the subjects who actually felt the effects was calculated.

The ratio of the subjects who actually felt the effects was 79% for the sample solution of Comparative Example 8. In contrast thereto, as seen in the ratio of 86% for the sample solution of Example 9 and the ratio of 92% for the sample solution of Example 2, the food products according to the invention showed a high ratio, which was particularly remarkable for that in which the molecular weight of collagen is small.

### (3) Evaluation of the amount of solution remained in container

Using the sample solutions of Examples 2 and 9 and Comparative Example 8, the amount of the respective solutions remained in a container was evaluated as an indicator of adhesion thereof to a container.

The respective sample solutions were loaded to a 30-ml container (manufactured by Nihon Taisanbin Glass Bottle Mfg. Co., Ltd., product number: No.2 30-25) in an amount of 30 ml and cooled at 4°C. Then, the content was transferred into another container, and the difference in the container mass before and after the transfer was measured to evaluate the amount of the solution remained in the container. As the method of the transfer, the mouth of the container was inverted by 180° to transfer the content, and after leaving it to stand for 10 seconds, the container was inverted back to the original position.

The amount of the remaining solution after the use was evaluated as follows. A: 0 to less than 0.5 g; B: from 0.5 g to less than 1.0 g; and C: 1 g or more. As a result, the solutions of Examples 2 and 9 were both evaluated as grade A (0 to less than 0.5 g), and the solution of Comparative Example 8 was evaluated as grade B (from 0.5 g to less than 1.0 g). Based on these results, it was found that the loss of the sample solutions of the Examples due to adhesion to the container was small.

### (4) Reproducibility

The same sample solutions as those of Examples 5 and 10 were each prepared (N = 5) and each of the thus prepared solutions were examined by sensory evaluation. The variation in the flavor of the 5 solutions was evaluated as follows. A: almost the same; B: included solution with a slightly different flavor; and C: included solution with a clearly different flavor.

As a result, Example 5 was evaluated as grade B, and Example 10 was evaluated as grade A. The sample solution of Example 10, in which the addition of maltose and the addition of citric acid after the masking treatment were each carried out at a high temperature, was found to be preferable from the viewpoint of the reproducibility.

These results indicate that the present invention can provide a collagen peptide-containing composition which contains a low-molecular-weight collagen peptide and is easy-to-drink due to its reduced bitterness and reduced odor.

## Claims

1. A method of producing a collagen peptide-containing composition, the method comprising performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass with respect to 1 part by mass of the collagen peptide, the reducing sugar being capable of undergoing Maillard reaction with an amino group in the collagen peptide.

2. The method of producing a collagen peptide-containing composition according to claim 1, wherein an amount of the reducing sugar is from 0.001 parts by mass to 0.03 parts by mass with respect to 1 part by mass of the collagen peptide.

3. The method of producing a collagen peptide-containing composition according to claim 1 or 2, wherein the collagen peptide has an average molecular weight of 1,000 or less.

4. The method of producing a collagen peptide-containing composition according to any one of claims 1 to 3, further comprising performing a thermal sterilization treatment.

5. The method of producing a collagen peptide-containing composition according to any one of claims 1 to 4, wherein the reducing sugar is a reducing sugar selected from reducing monosaccharides, reducing disaccharides, reducing trisaccharides and reducing oligosaccharides.

6. The method of producing a collagen peptide-containing composition according to any one of claims 1 to 5, further comprising adding at least one additional amino acid selected from the group consisting of lysine, proline and ornithine to a reaction product obtained by the masking treatment.

7. The method of producing a collagen peptide-containing composition according to any one of claims 1 to 5, further comprising adding at least one additional amino acid selected from the group consisting of lysine and proline to a reaction product obtained by the masking treatment.

8. The method of producing a collagen peptide-containing composition according to any one of claims 1 to 7, further comprising adding at least one additive component selected from the group consisting of demulcents and sweeteners to a reaction product obtained by the masking treatment.

9. The method of producing a collagen peptide-containing composition according to any one of claims 1 to 8, further comprising adding ascorbic acid to a reaction product obtained by the masking treatment.

10. The method of producing a collagen peptide-containing composition according to claim 1 wherein the liquid in which the collagen peptide and reducing sugar are reacted has a pH of from 5.3 to 12.

11. The method of producing a collagen peptide-containing composition according to claim 1 wherein the liquid in which the collagen peptide and reducing sugar are reacted has a pH of from 5.5 to 12.

12. A collagen peptide-containing composition obtained by the production method of any one of claims 1 to 11, having reducing sugars at the total content of from 0.0001 parts by mass to 0.5 parts by mass with respect to 1 part by mass of the collagen peptide.

13. A collagen peptide-containing composition according to claim 12, comprising a collagen peptide having an average molecular weight of 1,200 or less, a number of free amino group terminus, which is indicated when a ninhydrin reaction is performed on the collagen peptide, being 5 or less with respect to a number of free amino group terminus of glycine, which is indicated when a ninhydrin reaction is performed on glycine having the same mass as the collagen peptide and which is regarded as 100.

14. The collagen peptide-containing composition according to claim 13, which is obtained by the production method according to any one of claims 1 to 11.

15. The collagen peptide-containing composition according to claim 13 or 14, wherein a total amount of reducing sugars in the composition is from 0.0001 parts by mass to 0.5 parts by mass with respect to 1 part by mass of the collagen peptide.

16. A beverage or food product, comprising the collagen peptide-containing composition according to any one of claims 12 to 15.

17. A method of reducing odor of a collagen peptide-containing composition,
the method comprising performing a masking treatment including reacting, in a liquid having a pH of from 5 to 12 at a temperature of from 70°C to 100°C for 0.01 hours to 2 hours, a collagen peptide having an average molecular weight of 1,200 or less with a reducing sugar in an amount of from 0.0001 to 0.05 parts by mass with respect to 1 part by mass of the collagen peptide, the reducing sugar being capable of undergoing Maillard reaction with an amino group in the collagen peptide.

## Patentansprüche

1. Verfahren zur Herstellung einer Kollagenpeptid-haltigen Zusammensetzung, wobei das Verfahren das Durchführen einer Maskierungsbehandlung umfasst, welche das Umsetzen eines Kollagenpeptids mit einem mittleren Molekulargewicht von 1.200 oder kleiner mit einem reduzierenden Zucker in einer Menge von 0,0001 bis 0,05 Masseteile, bezogen auf 1 Masseteil des Kollagenpeptids, in einer Flüssigkeit mit einem pH-Wert von 5 bis 12 bei einer Temperatur von 70°C bis 100°C für 0,01 Stunden bis 2 Stunden einschließt, wobei der reduzierende Zucker in der Lage ist, eine Maillard-Reaktion mit einer Aminogruppe in dem Kollagenpeptid einzugehen.

2. Verfahren zur Herstellung einer Kollagenpeptid-haltigen Zusammensetzung gemäß Anspruch 1, worin die Menge des reduzierenden Zuckers von 0,001 Masseteilen bis 0,03 Masseteile beträgt, bezogen auf 1 Masseteil des Kollagenpeptids.

3. Verfahren zur Herstellung einer Kollagenpeptid-haltigen Zusammensetzung gemäß Anspruch 1 oder 2, worin das Kollagenpeptid ein mittleres Molekulargewicht von 1.000 oder kleiner aufweist.

4. Verfahren zur Herstellung einer Kollagenpeptid-haltigen Zusammensetzung gemäß irgendeinem der Ansprüche 1 bis 3, ferner umfassend das Durchführen einer thermischen Sterilisationsbehandlung.

5. Verfahren zur Herstellung einer Kollagenpeptid-haltigen Zusammensetzung gemäß irgendeinem der Ansprüche 1 bis 4, worin der reduzierende Zucker ein reduzierender Zucker ist, ausgewählt aus reduzierenden Monosacchariden, reduzierenden Disacchariden, reduzierenden Trisacchariden und reduzierenden Oligosacchariden.

6. Verfahren zur Herstellung einer Kollagenpeptid-haltigen Zusammensetzung gemäß irgendeinem der Ansprüche 1 bis 5, ferner umfassend das Zugeben von zumindest einer zusätzlichen Aminosäure, ausgewählt aus der Gruppe, bestehend aus Lysin, Prolin und Ornithin, zu einem durch die Maskierungsbehandlung erhaltenen Reaktionsprodukt.

7. Verfahren zur Herstellung einer Kollagenpeptid-haltigen Zusammensetzung gemäß irgendeinem der Ansprüche 1 bis 5, ferner umfassend das Zugeben von zumindest einer zusätzlichen Aminosäure, ausgewählt aus der Gruppe, bestehend aus Lysin und Prolin, zu einem durch die Maskierungsbehandlung erhaltenen Reaktionsprodukt.

8. Verfahren zur Herstellung einer Kollagenpeptid-haltigen Zusammensetzung gemäß irgendeinem der Ansprüche 1 bis 7, ferner umfassend das Zugeben von zumindest einer Additivkomponente, ausgewählt aus der Gruppe, bestehend aus Demulgentien und Süßstoffen, zu einem durch die Maskierungsbehandlung erhaltenen Reaktionsprodukt.

9. Verfahren zur Herstellung einer Kollagenpeptid-haltigen Zusammensetzung gemäß irgendeinem der Ansprüche 1 bis 8, ferner umfassend das Zugeben von Ascorbinsäure zu einem durch die Maskierungsbehandlung erhaltenen Reaktionsprodukt.

10. Verfahren zur Herstellung einer Kollagenpeptid-haltigen Zusammensetzung gemäß Anspruch 1, worin die Flüssigkeit, worin das Kollagenpeptid und der reduzierende Zucker umgesetzt werden, einen pH von 5,3 bis 12 aufweist.

11. Verfahren zur Herstellung einer Kollagenpeptid-haltigen Zusammensetzung gemäß Anspruch 1, worin die Flüssigkeit, worin das Kollagenpeptid und der reduzierende Zucker umgesetzt werden, einen pH von 5,5 bis 12 aufweist.

12. Kollagenpeptid-haltigen Zusammensetzung, erhalten durch das Herstellungsverfahren gemäß irgendeinem der Ansprüche 1 bis 11, die reduzierende Zucker in einer Gesamtmenge von 0,0001 Masseteile bis 0,5 Masseteile aufweist, bezogen auf 1 Masseteil des Kollagenpeptids.

13. Kollagenpeptid-haltigen Zusammensetzung gemäß Anspruch 12, umfassend ein Kollagenpeptid mit einem mittleren Molekulargewicht von 1.200 oder kleiner, einer Anzahl von freien, endständigen Aminogruppen, welche erhalten wird, wenn eine Ninhydrin-Reaktion an dem Kollagenpeptid durchgeführt wird, von 5 oder weniger im Hinblick auf die Anzahl der endständigen freien Aminogruppen von Glycin, welche erhalten wird, wenn eine Ninhydrin-Reaktion an Glycin mit der gleichen Masse wie das Kollagenpeptid durchgeführt wird, und welche als 100 angesehen wird.

14. Kollagenpeptid-haltigen Zusammensetzung gemäß Anspruch 13, welche durch das Herstellungsverfahren gemäß irgendeinem der Ansprüche 1 bis 11 erhalten wird.

15. Kollagenpeptid-haltigen Zusammensetzung gemäß Anspruch 13 oder 14, worin die Gesamtmenge von reduzierenden Zuckern in der Zusammensetzung von 0,0001 Masseteilen bis 0,5 Masseteile beträgt, bezogen auf 1 Masseteil des Kollagenpeptids.

16. Getränke- oder Nahrungsmittelprodukt, umfassend die Kollagenpeptid-haltigen Zusammensetzung gemäß irgendeinem der Ansprüche 12 bis 15.

17. Verfahren zum Reduzieren des Geruchs einer Kollagenpeptid-haltigen Zusammensetzung, wobei das Verfahren das Durchführen einer Maskierungsbehandlung umfasst, die das Umsetzen eines Kollagenpeptids mit einem mittleren Molekulargewicht von 1.200 oder kleiner mit einem reduzierenden Zucker in einer Menge von 0,0001 bis 0,05 Masseteile, bezogen auf 1 Masseteil des Kollagenpeptids, in einer Flüssigkeit mit einem pH-Wert von 5 bis 12 bei einer Temperatur von 70°C bis 100°C für 0,01 Stunden bis 2 Stunden umfasst, wobei der reduzierende Zucker in der Lage ist, eine Maillard-Reaktion mit einer Aminogruppe in dem Kollagenpeptid einzugehen.

## Revendications

1. Procédé de production d'une composition contenant un peptide de collagène, le procédé comprenant la réalisation d'un traitement de masquage incluant la réaction, dans un liquide ayant un pH de 5 à 12 à une température de 70 °C à 100 °C pendant 0,01 heure à 2 heures, d'un peptide de collagène ayant un poids moléculaire moyen de 1200 ou moins avec un sucre réducteur en une quantité de 0,0001 à 0,05 partie en masse par rapport à 1 partie en masse du peptide de collagène, le sucre réducteur étant capable de subir une réaction de Maillard avec un groupe aminé dans le peptide de collagène.

2. Procédé de production d'une composition contenant un peptide de collagène selon la revendication 1, dans lequel une quantité du sucre réducteur va de 0,001 partie en masse à 0,03 partie en masse par rapport à 1 partie en masse du peptide de collagène.

3. Procédé de production d'une composition contenant un peptide de collagène selon la revendication 1 ou 2, dans lequel le peptide de collagène a un poids moléculaire moyen de 1000 ou moins.

4. Procédé de production d'une composition contenant un peptide de collagène selon l'une quelconque des revendications 1 à 3, comprenant en outre la réalisation d'un traitement de stérilisation thermique.

5. Procédé de production d'une composition contenant un peptide de collagène selon l'une quelconque des revendications 1 à 4, dans lequel le sucre réducteur est un sucre réducteur sélectionné parmi les monosaccharides réducteurs, les disaccharides réducteurs, les trisaccharides réducteurs et les oligosaccharides réducteurs.

6. Procédé de production d'une composition contenant un peptide de collagène selon l'une quelconque des revendications 1 à 5, comprenant en outre l'ajout d'au moins un acide aminé supplémentaire sélectionné dans le groupe constitué de lysine, de proline et d'ornithine à un produit de réaction obtenu par le traitement de masquage.

7. Procédé de production d'une composition contenant un peptide de collagène selon l'une quelconque des revendications 1 à 5, comprenant en outre l'ajout d'au moins un acide aminé supplémentaire sélectionné dans le groupe constitué de lysine et de proline à un produit de réaction obtenu par le traitement de masquage.

8. Procédé de production d'une composition contenant un peptide de collagène selon l'une quelconque des revendications 1 à 7, comprenant en outre l'ajout d'au moins un composant additif sélectionné dans le groupe constitué d'émollients et d'édulcorants à un produit de réaction obtenu par le traitement de masquage.

9. Procédé de production d'une composition contenant un peptide de collagène selon l'une quelconque des revendications 1 à 8, comprenant en outre l'ajout d'acide ascorbique à un produit de réaction obtenu par le traitement de masquage.

10. Procédé de production d'une composition contenant un peptide de collagène selon la revendication 1 dans lequel le liquide dans lequel le peptide de collagène et le sucre réducteur réagissent a un pH de 5,3 à 12.

11. Procédé de production d'une composition contenant un peptide de collagène selon la revendication 1 dans lequel le liquide dans lequel le peptide de collagène et le sucre réducteur réagissent a un pH de 5,5 à 12.

12. Composition contenant un peptide de collagène obtenue par le procédé de production selon l'une quelconque des revendications 1 à 11, ayant des sucres réducteurs à la teneur totale de 0,0001 partie en masse à 0,5 partie en masse par rapport à 1 partie en masse du peptide de collagène.

13. Composition contenant un peptide de collagène selon la revendication 12, comprenant un peptide de collagène ayant un poids moléculaire moyen de 1200 ou moins, un nombre de terminus de groupe aminé libres, qui est indiqué quand une réaction de ninhydrine est réalisée sur le peptide de collagène, de 5 ou moins par rapport à un nombre de terminus de groupe aminé libres de glycine, qui est indiqué quand une réaction de ninhydrine est réalisée sur de la glycine ayant la même masse que le peptide de collagène et qui est considéré comme étant de 100.

14. Composition contenant un peptide de collagène selon la revendication 13, qui est obtenue par le procédé de production selon l'une quelconque des revendications 1 à 11.

15. Composition contenant un peptide de collagène selon la revendication 13 ou 14, dans laquelle une quantité totale de sucres réducteurs dans la composition est de 0,0001 partie en masse à 0,5 partie en masse par rapport à 1 partie en masse du peptide de collagène.

16. Produit de boisson ou alimentaire, comprenant la composition contenant un peptide de collagène selon l'une quelconque des revendications 12 à 15.

17. Procédé de réduction d'odeur d'une composition contenant un peptide de collagène,
le procédé comprenant la réalisation d'un traitement de masquage incluant la réaction, dans un liquide ayant un pH de 5 à 12 à une température de 70 °C à 100 °C pendant 0,01 heure à 2 heures, d'un peptide de collagène ayant un poids moléculaire moyen de 1200 ou moins avec un sucre réducteur en une quantité de 0,0001 à 0,05 partie en masse par rapport à 1 partie en masse du peptide de collagène, le sucre réducteur étant capable de subir une réaction de Maillard avec un groupe aminé dans le peptide de collagène.
